# EUROPEAN PATENT APPLICATION

(11) **EP 4 102 680 A1**
(43) Date of publication of application: **14.12.2022**
(21) Application number: 22177496.1
(22) Date of filing: 07.06.2022
(51) Int. Cl.: H02J 7/00

(54) **CIRCUIT HAVING BALANCED CHARGING AND CELL CONNECTION CONVERSION FUNCTIONS**

(30) Priority: 07.06.2021 CN 202110629852
(71) Applicant: Techtronic Cordless GP, Anderson, SC 29621 (US)
(72) Inventor: YAN, Renqiang, Dongguan City (CN)
(74) Representative: Novagraaf Group

(57) **Abstract**

The present invention discloses a circuit having balanced charging and cell connection conversion functions. The circuit according to the present invention includes n cell groups, n-1 third switching circuits, and a master control unit, where n is an integer greater than 1. Each of the cell groups includes a first switching circuit, a cell, and a second switching circuit that are connected in series in sequence. The first switching circuit is connected between a positive wire and a positive terminal of the cell. The second switching circuit is connected between a negative wire and a negative terminal of the cell. Each of the third switching circuits is connected between a positive terminal and a negative terminal of two cells adjacent to each other. The master control unit controls turn-on/turn-off of the first switching circuits, the second switching circuits, and the third switching circuits by sending a control signal on a control bus, to enable switching of a serial/parallel connection of the n cell groups.

## Description

### Technical Field

The present invention relates to a circuit having balanced charging and cell connection conversion functions. The present invention further relates to a battery pack provided with such a circuit.

### Background Art

Currently, more and more energy battery packs are used in our lives, such as for use in electric tools, electric vehicles, and communication devices. However, all cells in a battery pack may not have a completely consistent performance, and there may be some differences (tolerances) to a certain degree. When the differences are not balanced during each charging and discharging, the differences will accumulate as the number of times of charging and discharging increases. Eventually, this may cause an increasingly small capacity of the energy battery pack and damage to some of the cells (especially those with a poor consistency in terms of performance), thus shortening the service life of the battery pack. Moreover, when the cells are charged in series, there may be a situation in which individual cells are undercharged.

For these reasons, there is a need for a circuit having balanced charging and cell connection conversion functions, and a battery pack provided with such a circuit.

### Summary of the Invention

The object of the present application is to provide a circuit capable of balancing an electric quantity of each cell group or each cell in an energy battery pack. The circuit can eliminate the problems of a reduced capacity of a battery pack and a shorter service life thereof due to accumulation of differences in the performance of cells. The circuit can also implement the conversion of a serial and parallel connection of the cell groups in the battery pack, to implement multi-voltage outputs of the battery pack, to be adapted to different applications. The circuit may also be used, as an input power management circuit, for an electronic apparatus powered by various battery packs.

According to a first aspect of the present application, there is provided a circuit having a cell connection conversion function, the circuit including: n (n being an integer greater than 1) cell groups, each of which includes a first switching circuit, a cell, and a second switching circuit that are connected in series in sequence, where the first switching circuit is connected between a positive wire and a positive terminal of the cell, and the second switching circuit is connected between a negative wire and a negative terminal of the cell; n-1 third switching circuits, each of which is connected between a positive terminal and a negative terminal of two cells adjacent to each other; and a master control unit, which controls turn-on/turn-off of the first switching circuits, the second switching circuits, and the third switching circuits by sending a control signal on a control bus, to enable switching of a serial/parallel connection of the n cell groups.

Optionally, each of the first switching circuits, the second switching circuits, and the third switching circuits may be implemented by a metal oxide semiconductor field effect transistor (MOSFET). The metal oxide semiconductor field effect transistor may be a combination of an N-type MOSFET and a P-type MOSFET. The metal oxide semiconductor field effect transistor may be an N-type MOSFET, and the circuit may further include a boost circuit. The circuit may further include a power output and charging interface, which may be connected to an external power source to charge a voltage of the connected one or more cell groups in the n cell groups, or may be connected to an external load to discharge the connected one or more cell groups in the n cell groups. The master control unit may control a serial/parallel connection of the cell groups during charging, such that the charging includes serial charging and parallel charging. The master control unit may switch the serial charging and the parallel charging based on a temperature of the cells. The master control unit may switch the serial charging and the parallel charging based on a difference in a voltage of the cells. The master control unit may detect whether there is a difference in capacity of each of the cell groups, and send, upon detecting that the difference in the capacity is greater than a predetermined threshold, the control signal to switch the first switching circuits, the second switching circuits, and the third switching circuits such that one or more cell groups in the n cell groups that have a difference in capacity greater than the predetermined threshold are individually charged. The detecting may be implemented by checking the voltage and/or temperature of each of the cell groups. The circuit may further include a display, which may display the detected status of the n cell groups. The circuit may further include a user input device, which receives an input signal from a user, and the master control unit may send the control signal according to the input signal.

According to a second aspect of the present application, there is provided an input power management circuit, the circuit including: n (n being an integer greater than 1) battery input modules, each of which includes a positive input port, a negative input port, a first switching circuit, and a second switching circuit, where the first switching circuit is connected between a positive wire and the positive input port, and the second switching circuit is connected between a negative wire and the negative input port; n-1 third switching circuits, each of which is connected between a positive input port and a negative input port of two of the battery input modules that are adjacent to each other; and a master control unit, which controls turn-on/turn-off of the first switching circuits, the second switching circuits, and the third switching circuits by sending a control signal on a control bus, to enable switching of a serial/parallel connection of the n battery input modules.

In the present application, corresponding beneficial technical effects are achieved by using the technical solutions as defined in the present application. By means of the battery pack, different battery voltage outputs can be implemented by changing the serial and parallel connection of the cell groups inside the battery pack, and the serial and parallel connection of the cell groups can be intelligently changed during charging, to optimize a charging time (the serial charging having a higher efficiency and a shorter charging time than the parallel charging) and balanced charging.

By changing the serial and parallel connection of input batteries, the present invention can make it possible that 1) a plurality of battery packs can supply power to a powered apparatus simultaneously (in which case, the battery packs are required to have substantially consistent output voltages); 2) when only one of the plurality of battery packs supplies power to the powered apparatus, each battery pack may have different output voltages, such that batteries of different voltages can supply power to the powered apparatus, and a battery pack can be replaced/switched without any downtime (for example, a battery pack 2 is replaced while a battery pack 1 is being used, and the battery pack 1 is then intelligently switched to the battery pack 2 to supply power when it runs out of power, such that a machine can keep working without any downtime); and 3) the plurality of battery packs with different voltages are connected in series to supply power to the powered apparatus, such that the powered apparatus can work at different voltages.

Therefore, by means of the circuit of the present application, the serial and parallel connection of the battery cells can be changed according to user needs, a number of different voltages can be output to adapt to different applications, and parallel charging can be performed to balance the difference in each cell group or each cell. Moreover, the circuit can be used, as the input power management circuit, for an electronic apparatus powered by multiple battery packs.

### Brief Description of the Drawings

Objects and features of the present invention will become apparent from the following detailed description in conjunction with the accompanying drawings. However, it should be understood that the drawings are designed for illustration only, and are not intended to limit the present invention.
FIG. 1 schematically shows an exemplary block diagram of a circuit according to the present invention.
FIG. 2A schematically shows an exemplary block diagram of a circuit according to an embodiment of the present invention.
FIG. 2B schematically shows an exemplary block diagram of a circuit according to another embodiment of the present invention.
FIG. 3A schematically shows an exemplary circuit diagram of a battery pack implemented using a combination of an N-type metal oxide semiconductor field effect transistor (MOSFET) and a P-type MOSFET according to the present invention.
FIG. 3B schematically shows another exemplary circuit diagram of a battery pack implemented using only an N-type MOSFET according to the present invention.
FIG. 4 schematically shows an exemplary circuit diagram of the battery pack of FIG. 2 with cells connected in series.
FIG. 5 schematically shows an exemplary circuit diagram of the battery pack of FIG. 2 with cells connected in parallel.
FIG. 6 schematically shows a simplified circuit diagram of FIG. 5.
FIG. 7 schematically shows an exemplary circuit diagram of an input power management circuit according to the present invention.
FIG. 8 schematically shows an exemplary circuit diagram of voltage check.

### Detailed Description of Embodiments

The technical solutions in the present application will be described clearly and completely below with reference to the drawings; obviously, the described embodiments are some of, rather than all of, the embodiments of the present application. All other embodiments obtained by those of ordinary skill in the art based on the embodiments of the present application without creative efforts shall fall within the scope of protection of the present application.

In the description of this specification, the description with reference to terms such as "an embodiment", "some embodiments", "an example", "a specific example", or "some examples" means that specific features, structures, or characteristics described in combination with the embodiments or examples are included in at least one embodiment or example of the present application. In this specification, the schematic expressions of the described terms do not necessarily refer to the same embodiments or examples. Furthermore, the specific features, structures, or characteristics described may be combined in a suitable manner in any one or more embodiments or examples.

In order to facilitate those skilled in the art in understanding the technical solutions of the present invention, the technical solutions of the present invention will now be further described in conjunction with the accompanying drawings, in which the same reference numerals denote the same or similar elements.

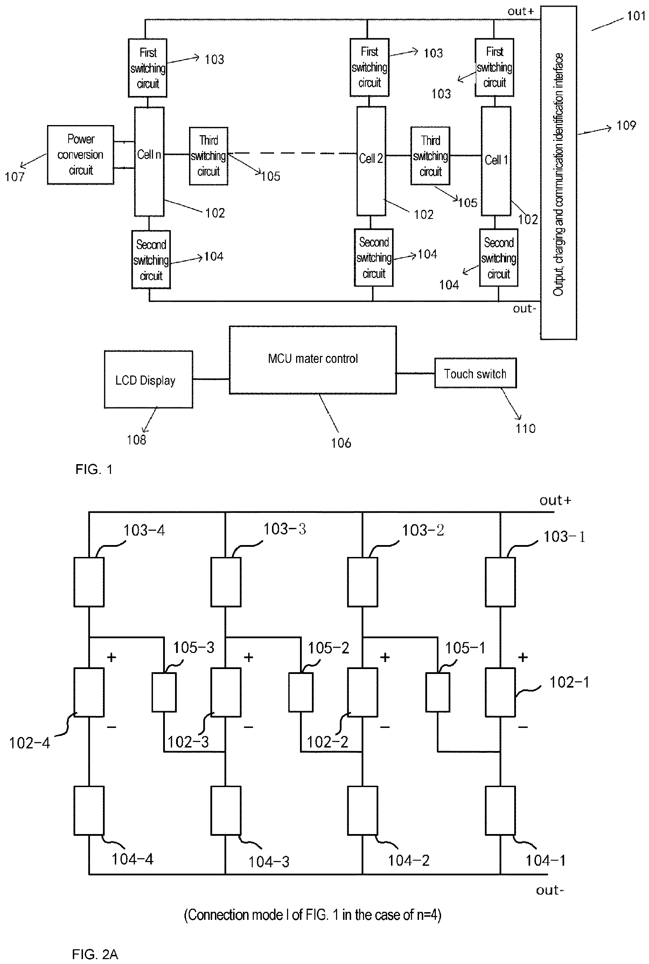

FIG. 1 shows a block diagram of a circuit 101 according to an embodiment of the present invention.

In FIG. 1, the circuit 101 may include n (n being an integer greater than 1) cell groups and n-1 third switching circuits 105.

As shown in FIG. 1, each cell group may include a first switching circuit 103, a cell 102, and a second switching circuit 104 that are connected in series in sequence. The first switching circuit 103 may be connected between a positive wire and a positive terminal of the cell 102. The second switching circuit 104 may be connected between a negative wire and a negative terminal of the cell 102. Each third switching circuit 105 is connected between a positive terminal and a negative terminal of two cells 102 adjacent to each other.

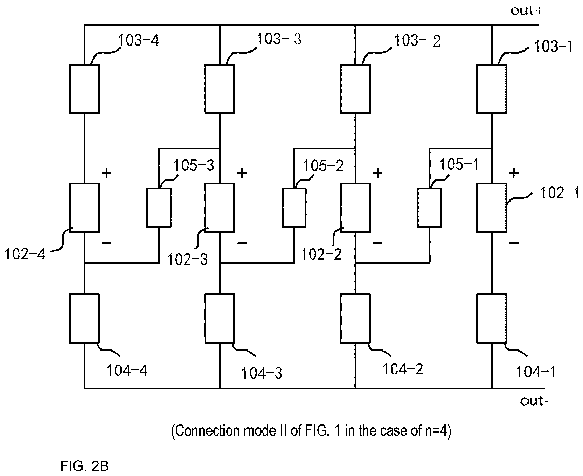

Assume n = 4. In an embodiment, as shown in FIG. 2A, three third switching circuits 105-1, 105-2, and 105-3 are connected between a negative terminal of a cell 102-1 and a positive terminal of a cell 102-2, between a negative terminal of the cell 102-2 and a positive terminal of a cell 102-3, and between a negative terminal of the cell 102-3 and a positive terminal of a cell 102-4, respectively. In this case, when a first switching circuit 103-1, a third switching circuit 105-1, and a second switching circuit 104-2 are turned on and other switching circuits are turned off, the circuit 101 is a circuit in which the cell 102-1 and the cell 102-2 are connected in series. On the other hand, when a first switching circuit 103-2, the second switching circuit 104-2, a first switching circuit 103-3, and a second switching circuit 104-3 are turned on and other switching circuits are turned off, the circuit 101 is a circuit in which the cell 102-2 and the cell 102-3 are connected in parallel. As such, a serial/parallel connection of one or more cells in the cells 102-1, 102-2, 102-3, and 102-4 can be implemented by turning on/turning off, in combination, the first switching circuits, the second switching circuits, and the third switching circuits. In another embodiment, as shown in FIG. 2B, three third switching circuits 105-1, 105-2, and 105-3 are connected between a positive terminal of a cell 102-1 and a negative terminal of a cell 102-2, between a positive terminal of the cell 102-2 and a negative terminal of a cell 102-3, and between a positive terminal of the cell 102-3 and a negative terminal of a cell 102-4, respectively. In this case, when a second switching circuit 104-1, the third switching circuit 105-1, and a first switching circuit 103-2 are turned on and other switching circuits are turned off, the circuit 101 is a circuit in which the cell 102-1 and the cell 102-2 are connected in series. On the other hand, when a first switching circuit 103-2, a second switching circuit 104-2, a first switching circuit 103-3, and a second switching circuit 104-3 are turned on and other switching circuits are turned off, the circuit 101 is a circuit in which the cell 102-2 and the cell 102-3 are connected in parallel. Similarly, a serial/parallel connection of one or more cells in the cells 102-1, 102-2, 102-3, and 102-4 can be implemented by turning on/turning off, in combination, the first switching circuits, the second switching circuits, and the third switching circuits.

The circuit 101 may also include a master control unit (MCU) 106. The MCU 106 controls turn-on/turn-off of the switching circuits 103, 104, and 105 by sending a control signal on a control bus, to enable switching of a serial/parallel connection of the n cell groups.

As shown in FIG. 1, the circuit 101 may also include a power conversion circuit 107, a display 108, a voltage output and charging interface 109, and a touch switch 110. They can be connected to the MCU 106.

The power conversion circuit 107 may provide for power to the MCU 106, and may also provide for power to the switching circuits 103, 104, and 105. The display 108 may be a display such as an LCD display or an LED display. The MCU 106 may control the display 108 to display information of a battery pack. The voltage output and charging interface 109 may include a charging/output power interface, a charging identification interface, a charging/output control signal interface, etc. The MCU 106 may send a charging/output control signal to control discharging or charging of the cell 1 02 through the voltage output and charging interface 109. The touch switch 110 may receive a trigger signal from a user. The MCU 106 may generate the control signal based on the trigger signal from the user, and send the generated control signal on the control bus to control turn-on/turn-off of the switching circuits 103, 104, and 105. The touch switch is merely an embodiment of a user input device. Other user input devices may occur to those skilled in the art. In another embodiment, the MCU 106 may automatically control turn-on/turn-off of the switching circuits 103, 104, and 105 based on the demand of a powered apparatus, to provide corresponding outputs. The MCU 106 can communicate with a controller of the powered apparatus to determine a power demand of the powered apparatus, so as to control the turn-on/turn-off of the switching circuits.

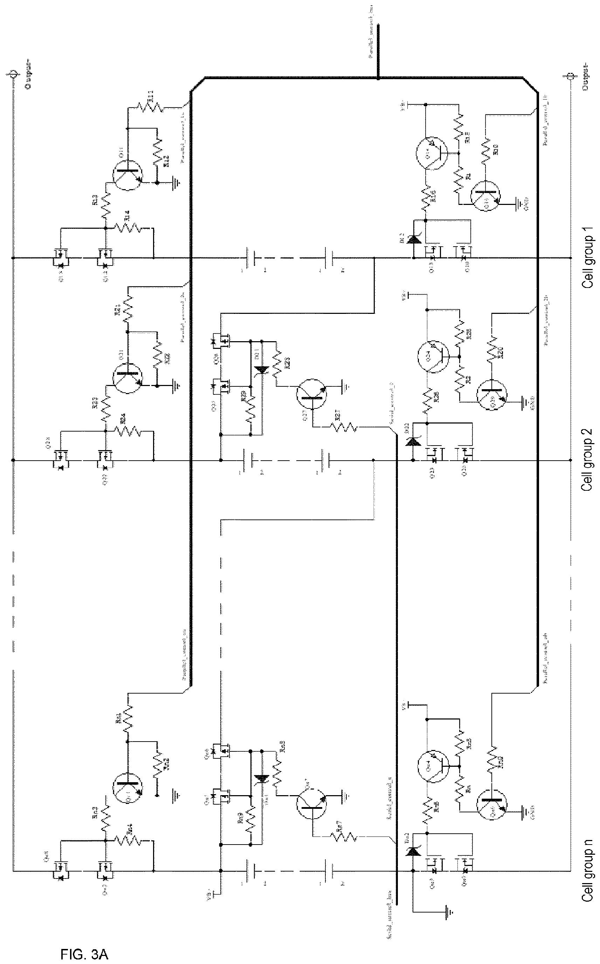

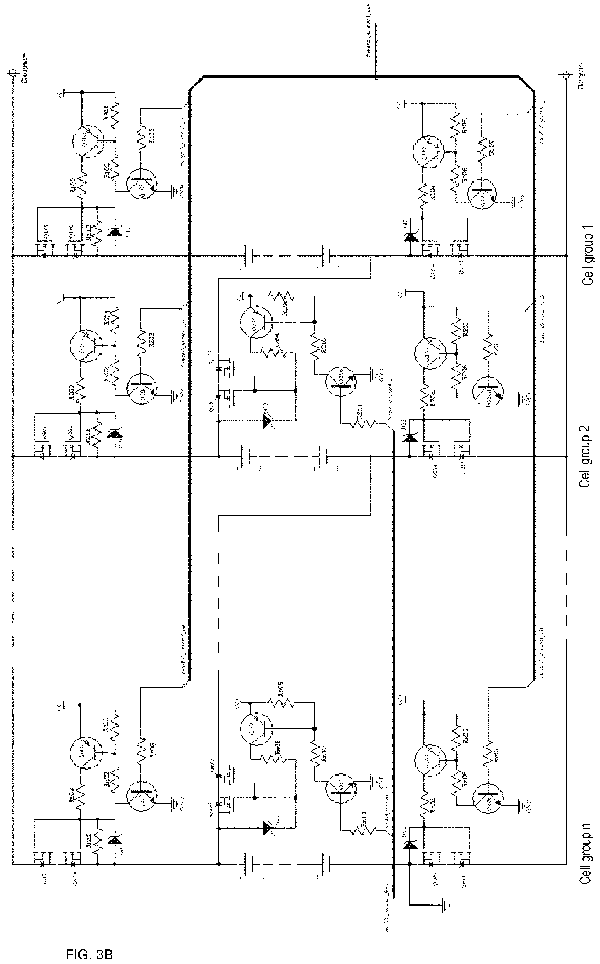

FIG. 3A schematically shows an exemplary circuit diagram of a battery pack according to a first embodiment of the present invention. FIG. 3B schematically shows another exemplary circuit diagram of a battery pack according to a second embodiment of the present invention.

In FIG. 3A, there is shown an embodiment in which the switching circuits 103, 104, and 105 of FIG. 1 are implemented using a combination of an N-type MOSFET and a P-type MOSFET. The advantages of this embodiment are that the circuit is simple, a boost circuit may not be required, and a gate control voltage of the MOSFETs may be provided by a single cell group.

In FIG. 3B, there is shown an embodiment in which the switching circuits 103, 104, and 105 of FIG. 1 are implemented using only the N-type MOSFET. The advantage of this embodiment is that the N-type power MOSFET can be alternatively used because few P-type power MOSFETs with a large current are available and thus expensive in applications that require a large current output (such as 50A). In this case, the P-type MOSFET of FIG. 3A is changed to the N-type MOSFET. Additionally, since the gate control voltage V_{GS} is relatively low, and the P-type MOSFET has a different control voltage from the N-type MOSFET, a boost circuit also needs to be included to achieve a high gate control voltage. As shown in FIG. 3B, VC+ is a boost voltage, with the boost circuit not shown therein. Additionally, in order to expand an output current, a plurality of N-type MOSFETs may also be connected in parallel to achieve a larger operating current.

In addition, the large-power MOSFET in each of the switching circuits 103, 104, and 105 may also be replaced with a large-power and single-channel relay, which yet has a larger drive current than the MOSFET and requires the circuit to be modified, but has a similar control principle thereto. Additionally, a triode in the aforementioned circuit may also be replaced with a small-power MOSFET. In specific applications, the circuit may be different, but an overall framework and a control principle thereof are similar.

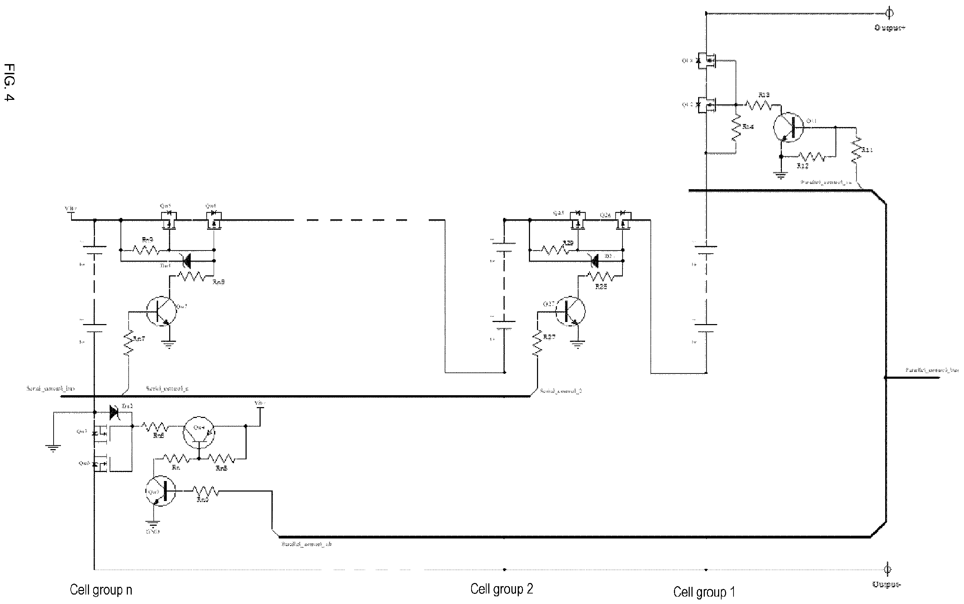

FIG. 4 schematically shows a circuit diagram of the battery pack of FIG. 3A with cells connected in series. As shown in FIG. 4, the MCU outputs high Serial control bus, Parallel_control_1a, and Parallel control nb, and other control signals are low. Q11, Q12, Q18, Q27, Q25, Q26, ... , Qn7, Qn5, Qn6, Qn9, Qn4, Qn3, and Qn0 will be turned on under the driving of a high control signal of the MCU and other MOSFETs will be turned off, such that the cells are connected in series as shown in FIG. 4.

The MCU outputs different combinations of control signals, and the circuit can also implement a serial connection of different cell groups and outputting of different voltages. For example, a cell group 1, a cell group 2, and a cell group 3 are connected in series, a cell group n and a cell group n-1 are connected in series, etc.

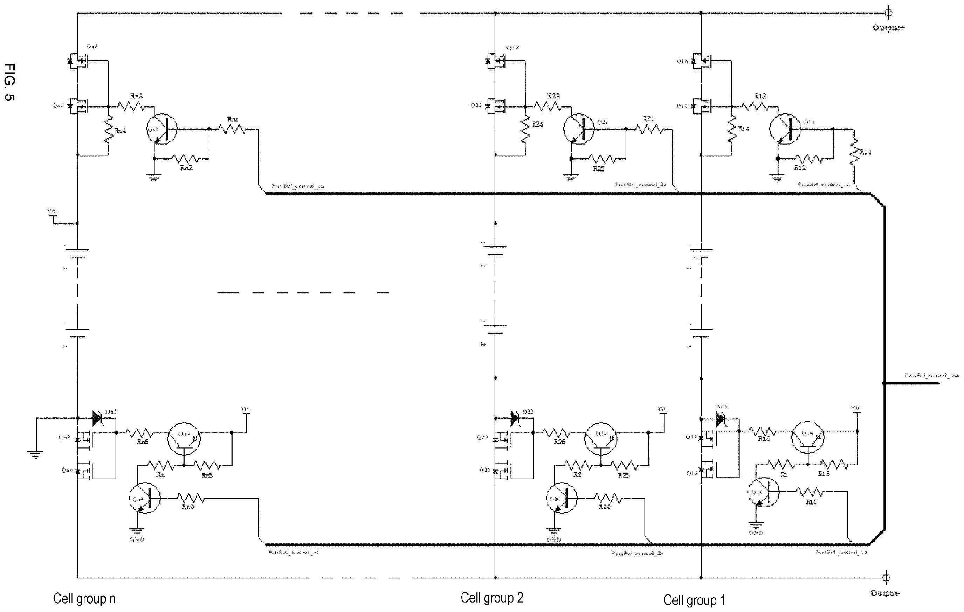

FIG. 5 schematically shows an exemplary circuit diagram of the battery pack of FIG. 3A with cells connected in parallel. In FIG. 4, the MCU outputs a high control signal Parallel control bus, and other control signals are low. Q11, Q12, Q18, Q19, Q14, Q10, Q13, Q21, Q22, Q28, Q29, Q24, Q20, Q23 ... Qn1, Qn2, Qn8, Qn9, Qn4, Qn0, and Qn3 will be turned on under the driving of the high control signal of the MCU and other MOSFETs will be turned off, such that the cells are connected in series as shown in FIG. 5.

The MCU outputs different combinations of control signals, and the circuit can also implement a parallel connection of different cell groups or output of the cell group n alone. For example, a cell group 1, a cell group 2, and a cell group 3 are connected in parallel, and a cell group n and a cell group n-1 are connected in parallel.

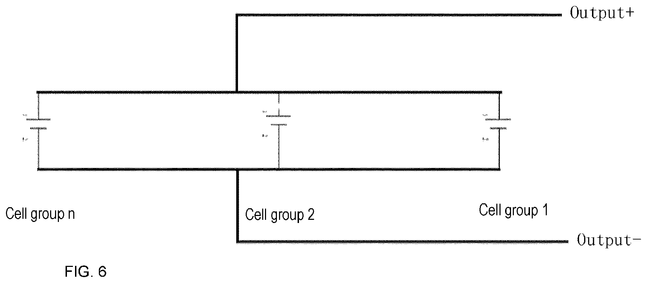

FIG. 6 schematically shows a simplified circuit diagram of FIG. 5. In FIG. 6, there is shown the simplified circuit diagram with the cell group 1, the cell group 2, and the cell group n connected in parallel. The cell group 1, the cell group 2, and the cell group n may be charged or discharged independently where the cell group 1, the cell group 2, and the cell group n are connected in parallel.

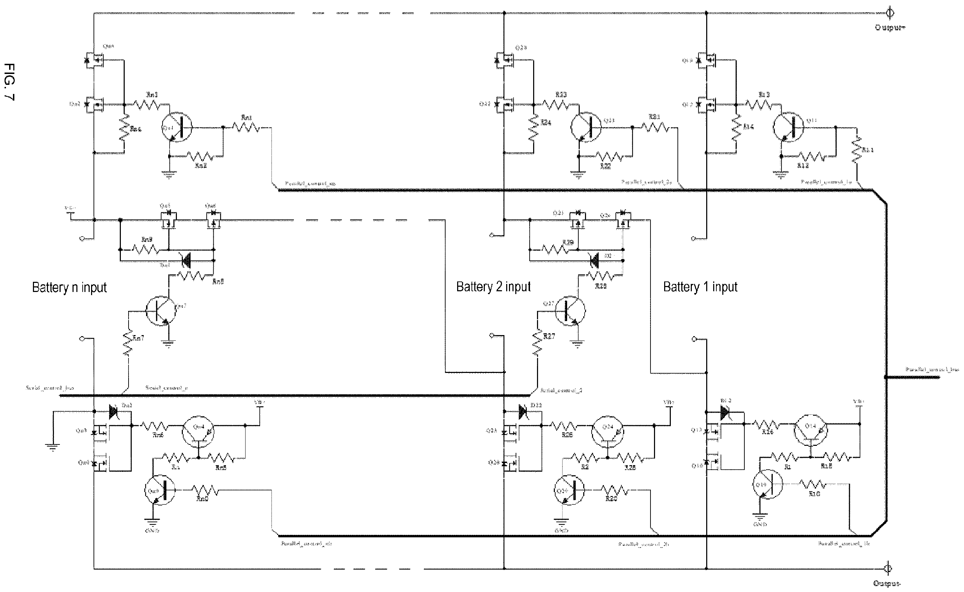

FIG. 7 schematically shows an exemplary circuit diagram of an input power management circuit 701 according to the present invention. The input power management circuit 701 may be used for an electronic apparatus powered by various battery packs, to improve its usage time and adapt to different battery packs. The input power management circuit 701 of FIG. 7 includes n (n being an integer greater than 1) battery input modules 702 to replace the n cell groups of FIG. 3A. Each battery input module 702 includes a positive input port, a negative input port, a first switching circuit 103, and a second switching circuit 104, where the first switching circuit 103 is connected between a positive wire and the positive input port, and the second switching circuit 104 is connected between a negative wire and the negative input port. As with the circuit 101 shown in FIG. 1, the input power management circuit 701 of FIG. 7 may also include n-1 third switching circuits 105. Each third switching circuit 105 is connected between a positive input port and a negative input port of two battery input modules adjacent to each other. The input power management circuit 701 of FIG. 7 may further include a MCU 106. The MCU 106 controls turn-on/turn-off of the switching circuits 103, 104, and 105 by sending a control signal on a control bus, to enable switching of a serial/parallel connection of the n battery input modules 702.

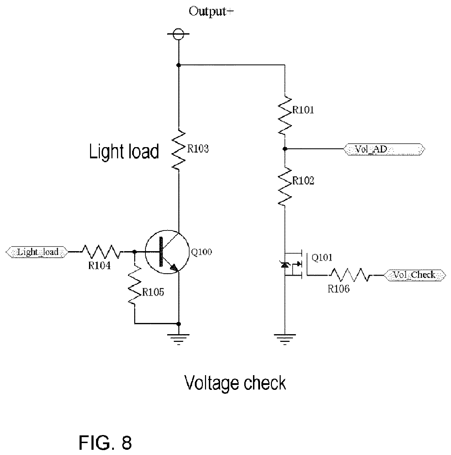

FIG. 8 schematically shows an exemplary circuit diagram of voltage check. The MCU 106 may monitor a voltage and/or temperature of each cell group to detect whether there is a significant difference in capacity of each cell group. The MCU 106 may send, upon detection of a significant difference (for example, the detected difference > 0.2 V), a control signal to switch the first switching circuit, the second switching circuit, and the third switching circuit such that one or more cell groups in the n cell groups that have a difference in capacity greater than a predetermined threshold are individually charged or discharged.

As shown in FIG. 8, during charging, the MCU 106 can select different charging modes by checking voltages of each cell group with no load and a light load:
1) When there is no significant difference in the voltages of the cell groups, the MCU 106 sends a control signal to enable cells to be connected first in series for charging, and then transmits this information to a charger through a charging control signal interface. When the cells are nearly fully charged, for example, by checking that a voltage of the cells reaches approximately 95% of a rated voltage (a person skilled in the art will understand that the percentage may be determined as needed), the MCU 106 sends the control signal to enable battery groups are connected, instead, in parallel for charging, and then transmits the information to a charger through a charging control signal interface, to achieve balanced charging between the cell groups and balanced capacity of the cells, and thus improve the service life of the battery pack. When the cells are fully charged, the MCU 106 will turn off the charging circuit, and the charging is thus completed.
2) When there is a significant difference in the voltages of the cell groups, the MCU 106 will send a control signal to switch the first switching circuit, the second switching circuit, and the third switching circuit such that a cell group with a significant difference is charged first, and is then charged, after elimination of the significant difference, in the aforementioned mode in which there is no significant difference.

Optionally, another mode of charging is to use serial charging and parallel charging alternately. This can take both a charging speed and the balanced charging between the cells into account. For example, the cells may be charged in series for 60 minutes, and then instead in parallel for 10 minutes. Then, this process is repeated until the cells are nearly fully charged, and the cells are then charged by means of the parallel charging until they are fully charged.

Preferably, serial charging and parallel charging may be switched based on a temperature of the cells. Where the charging current remains unchanged, a charging current flowing through each cell is larger during the serial charging, and a charging current flowing through each cell is smaller during the parallel charging. For this reason, the cells tend to heat up during the serial charging. In an embodiment of the present invention, serial charging is first performed at the beginning of charging. When the temperature of the cells reaches a predetermined threshold, serial charging may be automatically switched to the parallel charging, to prevent the temperature of the cells from rising rapidly and then reaching a cut-off temperature threshold, while implementing the balanced charging between the cells. When the temperature of the cells drops to a predetermined temperature below the predetermined threshold, the parallel charging may be automatically re-switched to the serial charging. This process is repeated until the cells are nearly fully charged, and the cells are then charged by means of the parallel charging until they are fully charged.

In another embodiment, serial charging and parallel charging may be switched based on a difference in capacity of the cells. Specifically, when the difference in the capacity of the cells is greater than a predetermined threshold, the control unit controls the circuit so that the serial charging is automatically switched to the parallel charging until the difference in the capacity of the cells is reduced to a predetermined value below the predetermined threshold.

In addition, a user can change a battery voltage output by means of a touch switch button. The user can control the MCU 106 to generate the control signal by a touch switch 110. The user makes a long press on the touch switch 110 to implement self-inspection of the battery pack: the MCU 106 checks voltages of each cell group with no load and a light load in turn, to obtain the voltages of each cell group with no load and a light load, thereby determining whether each cell group is open-circuited or damaged.

The circuit of the present invention may also be used for large-capacity mobile power sources. In such large-capacity mobile power sources, a power output is provided by adding a plurality of battery packs. As described above, the circuit according to the present invention can implement the conversion of serial and parallel connections. Therefore, 1) a plurality of battery packs can supply power to a powered apparatus simultaneously (in which case, the battery packs are required to have substantially consistent output voltages); 2) when only one of the plurality of battery packs supplies power to the powered apparatus, each battery pack may have a different output voltage, and a battery pack can be replaced/switched without any downtime (for example, a battery pack 2 is replaced while a battery pack 1 is being used, and the battery pack 1 is then intelligently switched to the battery pack 2 to supply power when it runs out of power, such that a machine can keep working without any downtime); and 3) the plurality of battery packs with different voltages are connected in series to supply power to the powered apparatus, such that the powered apparatus can work at different voltages.

Therefore, by means of the circuit of the present application, the serial and parallel connection of the battery cells can be changed according to user needs, a number of different voltages can be output to adapt to different applications, and parallel charging can be performed to balance the difference in each cell group or each cell. Moreover, the circuit can be used, as the input power management circuit, for an electronic apparatus powered by multiple battery packs.

The above-described embodiments are merely used for illustrating, rather than limiting, the technical solutions of the present application. Although the present application has been illustrated in detail with reference to the foregoing embodiments, those of ordinary skill in the art should understand that the technical solutions described in the foregoing embodiments may still be modified, or some or all of the technical features therein may be equivalently replaced, without departing from the scope of the present application.

## Claims

1. Circuit having a cell connection conversion function, the circuit comprising:
n cell groups, each of which comprises a first switching circuit, a cell, and a second switching circuit that are connected in series in sequence, wherein the first switching circuit is connected between a positive wire and a positive terminal of the cell, and the second switching circuit is connected between a negative wire and a negative terminal of the cell, where n is an integer greater than 1;
n-1 third switching circuits, each of which is connected between a positive terminal and a negative terminal of two cells adjacent to each other; and
a master control unit,
which controls turn-on/turn-off of the first switching circuits, the second switching circuits, and the third switching circuits by sending a control signal on a control bus, to enable switching of a serial/parallel connection of the n cell groups.

2. Circuit according to Claim 1, wherein each of the first switching circuits, the second switching circuits, and the third switching circuits is implemented by a metal oxide semiconductor field effect transistor (MOSFET).

3. Circuit according to Claim 2, wherein the metal oxide semiconductor field effect transistor is a combination of an N-type MOSFET and a P-type MOSFET.

4. Circuit according to Claim 2, wherein the metal oxide semiconductor field effect transistor is an N-type MOSFET, and the circuit further comprises a boost circuit.

5. Circuit according to Claim 1, further comprising a power output and charging interface, which is connected to an external power source to charge a voltage of the connected one or more cell groups in the n cell groups, or is connected to an external load to discharge the connected one or more cell groups in the n cell groups.

6. Circuit according to Claim 5, wherein the master control unit controls a serial/parallel connection of the cell groups during charging, such that the charging comprises serial charging and parallel charging.

7. Circuit according to Claim 6, wherein the master control unit switches the serial charging and the parallel charging based on a temperature of the cells.

8. Circuit according to Claim 6, wherein the master control unit switches the serial charging and the parallel charging based on a difference in a voltage of the cells.

9. Circuit according to Claim 5, wherein the master control unit detects whether there is a difference in capacity of each of the cell groups, and sends, upon detecting that the difference in the capacity is greater than a predetermined threshold, the control signal to switch the first switching circuits, the second switching circuits, and the third switching circuits such that one or more cell groups in the n cell groups that have a difference in capacity greater than the predetermined threshold are individually charged.

10. Circuit according to Claim 9, wherein the detecting is implemented by checking the voltage and/or temperature of each of the cell groups.

11. Circuit according to Claim 9, further comprising a display, which displays the detected status of the n cell groups.

12. Circuit according to Claim 2, wherein the circuit further comprises a user input device, which receives an input signal from a user, and wherein the master control unit sends the control signal according to the input signal.

13. Input power management circuit, comprising:
n battery input modules, each of which comprises a positive input port, a negative input port, a first switching circuit, and a second switching circuit, wherein the first switching circuit is connected between a positive wire and the positive input port, and the second switching circuit is connected between a negative wire and the negative input port, where n is an integer greater than 1;
n-1 third switching circuits, each of which is connected between a positive input port and a negative input port of two of the battery input modules that are adjacent to each other; and
a master control unit,
which controls turn-on/turn-off of the first switching circuits, the second switching circuits, and the third switching circuits by sending a control signal on a control bus, to enable switching of a serial/parallel connection of the n battery input modules.
